# EUROPÄISCHE PATENTSCHRIFT

(11) **EP 1 256 141 B1**
(45) Veröffentlichungstag und Bekanntmachung des Hinweises auf die Patenterteilung: **10.03.2004**
(21) Anmeldenummer: 00990802.1
(22) Anmeldetag: 20.12.2000
(51) Int. Cl.: H01M 8/06, C01B 3/32

(54) **SYSTEM ZUR VORSORGUNG VON WENIGSTENS ZWEI KOMPONENTEN EINES GASERZEUGUNGSSYSTEMS**
SYSTEM FOR SUPPLYING AT LEAST TWO COMPONENTS OF A GAS PRODUCING SYSTEM
SYSTEME D'ALIMENTATION D'AU MOINS DEUX COMPOSANTS D'UN SYSTEME GENERATEUR DE GAZ

(30) Priorität: 26.01.2000 DE 10003274
(43) Veröffentlichungstag der Anmeldung: 13.11.2002
(73) Patentinhaber: Ballard Power Systems AG, 73230 Kirchheim / Teck-Nabern (DE)
(72) Erfinder: BONEBERG, Stefan, 72660 Beuren (DE); MOTZET, Bruno, 73235 Weilheim/Teck (DE); TISCHLER, Alois, 94501 Aidenbach (DE); WEISSER, Marc, 73277 Owen/Teck (DE)
(74) Vertreter: Beyer, Andreas, Dr.
(86) Internationale Anmeldenummer: PCT/EP2000/012997
(87) Internationale Veröffentlichungsnummer: WO 2001/056105

(56) Entgegenhaltungen:
- EP-A- 0 206 608
- EP-A- 0 831 055
- EP-A- 0 920 064
- EP-A- 0 921 584
- EP-A- 0 977 293
- WO-A-99/65097
- US-A- 5 043 232

## Beschreibung

Die Erfindung betrifft ein System zur Versorgung von wenigstens zwei Komponenten eines Gaserzeugungssystems einer Brennstoffzellenanlage, insbesondere den Stufen eines mehrstufigen Reformierungsprozesses, mit einem übererhitzten Kohlenwasserstoff oder einem Kohlenwasserstoff/Wasser-Gemisch.

Aus dem allgemeinen Stand der Technik ist es bekannt, daß Gaserzeugungssysteme zur Erzeugung eines wasserstoffhaltigen Gases, beispielsweise für Brennstoffzellenanlagen, insbesondere für den mobilen Einsatz in einem Kraftfahrzeug, über mehrere Komponenten verfügen. Neben den üblicherweise in einer Reihenschaltung angeordneten Komponenten, wie beispielsweise einem Reformer einer Reinigungsstufe oder dergleichen, kann es je nach Betriebszustand der Brennstoffzellenanlage notwendig sein, daß wenigstens zwei Komponenten des Gaserzeugungssystems gegebenenfalls zusätzlich zu ihrer Reihenschaltung parallel mit verdampftem und/oder überhitzten Kohlenwasserstoff oder einem Kohlenwasserstoff/Wasser-Gemisch versorgt werden. Üblicherweise werden hierbei dann zwei Systeme zum Verdampfen oder Überhitzen des Kohlenwasserstoffs bzw. des Kohlenwasserstoff/Wasser-Gemischs eingesetzt.

So beschreibt beispielsweise die DE 196 39 150 C2 ein System, welches dafür prinzipiell geeignet ist, und welches über eine zentrale Heizvorrichtung die notwendige Wärmeenergie zum Verdampfen und/oder Überhitzen bereitstellt. Dabei wird ein Brennmittel zusammen mit einem sauerstoffhaltigen Gas in einem Zentralbrenner katalytisch oxidiert. Die in dem Zentralbrenner erzeugte Wärmeenergie wird über Wärmeträgermedien den Systemkomponenten des Gaserzeugungssystems zugeführt. Durch die erforderliche Verteilung der thermischen Energie mittels eines Wärmeträgermediums auf die einzelnen Komponenten sind entsprechende Leitungselemente notwendig, welche den zentralen Brenner wärmeträgermedienseitig mit den weiteren Komponenten verbinden. In diesen Bereichen können jedoch erhebliche Wärmeverluste auftreten, die den Gesamtwirkungsgrad der Anlage in nachteiliger Weise senken.

Eine derartige Anlage, welche sich eines Wärmeträgermediums zum Verteilen von erzeugter thermischer Energie bedient, weist außerdem den Nachteil auf, daß sie nicht die insbesondere für den mobilen Einsatz in einem Kraftfahrzeug erforderliche dynamische Reaktionsfähigkeit aufweist, welche von den Betreibern eines derartigen Systems gefordert wird.

Ein weiterer Nachteil liegt darin, daß über den zentralen Brenner das gesamte Wärmeträgermedium sowie alle zu versorgenden Komponenten erst auf eine entsprechende Betriebstemperatur gebracht werden müssen, bevor das Gesamtsystem eine störungsfreie Gaserzeugung entsprechend der von außen vorgegebenen Lastanforderungen an eine Brennstoffzelle der Brennstoffzellenanlage ermöglicht.

Es ist Aufgabe der Erfindung, ein System zur Versorgung von wenigstens zwei Komponenten eines Gaserzeugungssystems bereitzustellen, bei welchem eine sehr hohe Flexibilität bezüglich der Versorgungsmengen, insbesondere auch in Abhängigkeit der Betriebstemperatur des Gesamtsystems, sowie ein hoher Wirkungsgrad der Gesamtanlage zu erzielen ist.

Erfindungsgemäß wird diese Aufgabe durch das mit den Merkmalen des Anspruchs 1 beschriebene System gelöst.

Das entsprechende System nutzt dazu in erfindungsgemäßer Weise wenigstens zwei Wärmetauscher, die mit ihrem jeweiligen medienseitigen Bereich jeweils wenigstens einer der Komponenten zugeordnet sind. Der Eintrag von Energie in einem dazu dienenden Bereich des jeweiligen Wärmetauschers erfolgt in der Art einer Reihenschaltung der beiden Wärmetauscher hintereinander. Damit läßt sich in besonders günstiger und vorteilhafter Weise eine getrennte, gegebenenfalls vollkommen unabhängig voneinander ausgebildete Versorgung von wenigstens zwei Komponenten, die hier insbesondere die Stufen eines mehrstufigen Reformierungsprozesses sein können, mit einem verdampften und/oder überhitzten Kohlenwasserstoff oder einem entsprechenden Kohlenwasserstoff/ Wasser-Gemisch erreichen. Die besondere Variabilität des Aufbaus läßt sich dabei mit zwei getrennten Dosierungen für den jeweiligen Wärmetauscher erreichen. Dadurch, daß die Bereiche zum Eintrag von thermischer Energie in der Art einer Reihenschaltung hintereinander geschaltet sind, läßt sich die Versorgung der beiden Wärmetauscher mit thermischer Energie jedoch sehr effizient gestalten und es kann auf Wärmeträgermedien zur Verteilung der erzeugten thermischen Energie auf die jeweiligen Wärmetauscher gänzlich verzichtet werden.

In einer besonders günstigen Ausgestaltung der Erfindung erfolgt der Eintrag von thermischer Energie in dem in Richtung der Reihenschaltung ersten Wärmetauscher durch eine katalytische Verbrennung von Abgasen der Brennstoffzelle und/oder zusätzlichem Brennstoff. Dabei gelangen die Abgase der katalytischen Verbrennung, welche direkt in dem in Richtung der Reihenschaltung ersten Wärmetauscher erfolgt, durch den zum Eintrag von thermischer Energie bestimmten Bereich des in Richtung der Reihenschaltung zweiten Wärmetauschers.

Der erste Wärmetauscher dient damit in erfindungsgemäßer Weise der direkten Umsetzung von den eingebrachten Stoffen mittels einer katalytischen Verbrennung, wobei hier die entstandene thermische Energie direkt in dem ersten Wärmetauscher anfällt. Die verbleibenden, im allgemeinen heißen Abgase dieser katalytischen Verbrennung durchströmen den zum Eintrag von thermischer Energie dienenden Bereich des zweiten Wärmetauschers. Zusammen läßt sich so ein hochgradiges effizientes, bezüglich des Packagings sehr kleines System erstellen, da der erste Wärmetauscher gleichzeitig als katalytischer Brenner dient, wobei die Abgase dieser Verbrennung den zweiten Wärmetauscher durchströmen.

In einer weiteren, alternativen Ausgestaltung der Erfindung ist in Richtung der Reihenschaltung vor dem dem Eintrag von thermischer Energie dienenden Bereich des ersten Wärmetauschers ein Vorbrenner angeordnet.

Die Abgase dieses Vorbrenners strömen dabei durch den dem Eintrag der thermischen Energie dienenden Bereich der wenigstens zwei Wärmetauscher. Im Gegensatz zu dem oben beschriebenen Ausführungsbeispiel mittels einer katalytischen Verbrennung in dem ersten Wärmetauscher, erlaubt die Verbrennung in dem Vorbrenner einen vergleichsweise einfacheren Aufbau des Wärmetauschers aufgrund dessen, daß in dem dem Energieeintrag dienenden Bereich des Wärmetauschers ausschließlich Abgase strömen. Daher muß der Wärmetauscher nicht gegen eine gegebenenfalls mögliche Explosion geschützt werden, wie dies im Falle des Wärmetauschers als katalytischer Brenner der Fall ist. Der Wärmetauscher kann damit in seiner Herstellung und in seiner Bauweise entsprechend einfacher ausgeführt werden. Damit ergibt sich zusätzlich der Vorteil, daß aufgrund der geringeren Masse des Wärmetauschers und damit einer geringeren Wärmekapazität ein weitaus schnelleres dynamisches Ansprechverhalten des Wärmetauschers realisiert werden kann.

Weitere vorteilhafte Ausgestaltungen und Weiterbildungen der Erfindung ergeben sich aus den Unteransprüchen und den anhand der Zeichnung nachfolgend dargestellten Ausführungsbeispielen.

Es zeigt:
- Fig. 1: einen möglichen Aufbau des erfindungsgemäßen Systems zur Versorgung von wenigstens zwei Komponenten eines Gaserzeugungssystems mit einem Brenner und zwei Wärmetauschern;
- Fig. 2: einen möglichen Aufbau des erfindungsgemäßen Systems zur Versorgung von wenigstens zwei Komponenten eines Gaserzeugungssystems mit zwei Brennern und zwei Wärmetauschern; und
- Fig. 3: einen alternativen Aufbau des Systems zur Versorgung von wenigstens zwei Komponenten eines Gaserzeugungssystems mit einem über eine katalytische Verbrennung beheizten Wärmetauscher.

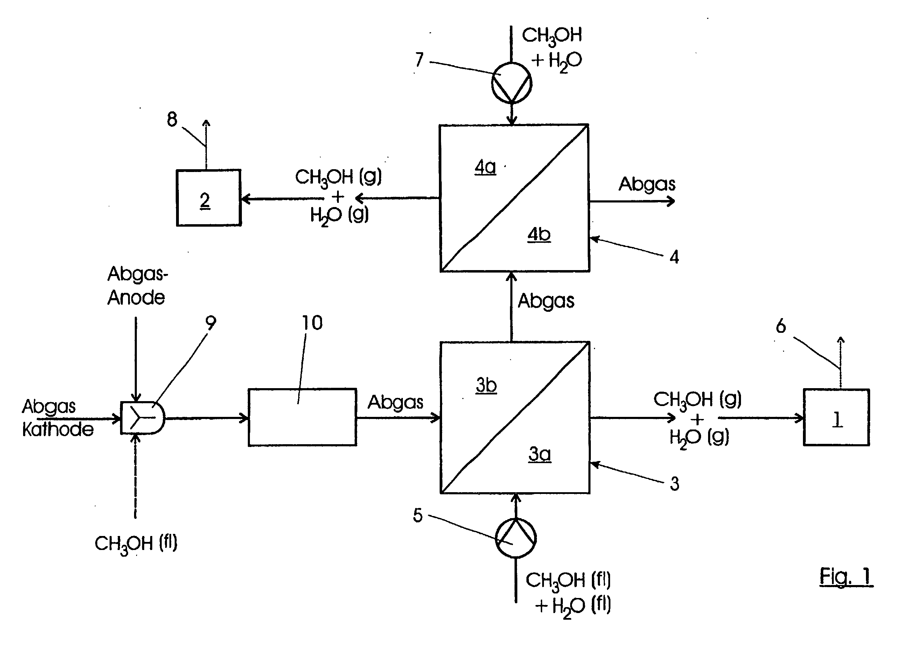

In Fig. 1 ist ein möglicher Aufbau des Systems zum Versorgen von wenigstens zwei Komponenten 1, 2 mit einem erwärmten, verdampften und/oder überhitzten Kohlenwasserstoff oder Kohlenwasserstoff/Wasser-Gemisch dargestellt. Bei den beiden Komponenten 1, 2 kann es sich insbesondere um zwei Stufen eines mehrstufigen Reformierungsprozesses, beispielsweise um eine Komponente 1 zur partiellen Oxidation und um eine Komponente 2 zur katalytischen Reformierung handeln. In allen Ausführungsbeispielen soll als Kohlenwasserstoff bzw. Kohlenwasserstoff/Wasser-Gemisch ein Gemisch aus Methanol (CH₃OH) und Wasser (H₂O) eingesetzt werden.

Das System in dem Aufbau gemäß Fig. 1 weist zwei Wärmetauscher 3, 4 auf, welche jeweils einen medienseitigen Bereich 3a, 4a und einen dem Eintrag von thermischer Energie dienenden Bereich 3b, 4b umfassen.

Der prinzipmäßige Aufbau zeigt, daß die Komponente 1 über den Wärmetauscher 3 und eine Dosiereinrichtung 5 mit dem Methanol/Wasser-Dampf versorgt wird. Die Weiterleitung und Weiterverwendung des in der Komponente 1 reformierten bzw. teilreformierten Produkts erfolgt in an sich bekannter Weise und ist über einen punktierten Pfeil 6 lediglich angedeutet.

Vergleichbares gilt auch für die Komponente 2, welche über den Wärmetauscher 4 und eine weitere Dosiereinrichtung 7 mit den erforderlichen Edukten versorgt wird, wobei auch hier die Produkte gemäß dem Pfeil 8 in an sich bekannter Weise weitergeleitet und weiterverwendet werden.

Das besondere Augenmerk gilt nun der Erzeugung und Verwendung der für das Verdampfen und/oder Überhitzen des Methanol/Wasser-Gemischs erforderlichen thermischen Energie in dem System gemäß Fig. 1. Dazu wird in einer prinzipmäßig angedeuteten Mischeinrichtung 9 das Anoden- und Kathodenabgas einer nicht dargestellten Brennstoffzelle einer in ihrer Gesamtheit ebenfalls nicht dargestellten Brennstoffzellenanlage vermischt.

Das Kathodenabgas der Brennstoffzelle weist dabei einen vergleichsweise hohen Anteil an Restsauerstoff auf, so daß dieser zusammen mit den in dem Anodengas enthaltenen Resten an Wasserstoff, Methanol und gegebenenfalls Kohlenmonoxid in einem Vorbrenner 10 verbrannt werden können. Da die aus dem Anoden- bzw. Kathodenbereich der Brennstoffzelle stammenden Gase systembedingt ohnehin unter einem gewissen Druck stehen, sind keine weiteren Fördereinrichtungen zur Zufuhr der genannten Gase notwendig.

In der Startphase der Brennstoffzellenanlage wird die Brennstoffzelle allerdings noch keine ausreichende Menge an Abgasen liefern, da insbesondere der Kathodenbereich der Brennstoffzelle zu diesem Zeitpunkt jedoch mit Luft beaufschlagt ist, gelangt so die noch annähernd unverbrauchte Luft als "Kathodenabgas" zu der Mischeinrichtung 9. Für diese Betriebszustände kann der Mischeinrichtung 9 optional noch ein weiteres Brennmittel, bevorzugterweise selbstverständlich der in der Brennstoffzellenanlage ohnehin vorhandene Kohlenwasserstoff, hier also insbesondere das Methanol (CH₃OH), zugeführt werden. Selbstverständlich ist diese optionale Zufuhr von Methanol zu der Mischeinrichtung 9 auch dann möglich, wenn aufgrund bestimmter Lastbedingungen der Brennstoffzellenanlage, z.B. zu Beginn einer sprungartigen Lasterhöhung, die in dem Anodenabgas vorliegenden brennbaren Reststoffe zur Erzeugung der erforderlichen thermischen Energie in dem Vorbrenner 10 vorübergehend nicht ausreichen.

Bei dem Vorbrenner 10 kann es sich in der bevorzugten Ausführung um einen einfachen thermischen Brenner handeln, welcher die eingebrachten Gase bzw. das eingebrachte Methanol wenigstens annähernd vollständig verbrennt. Dieser an sich bekannte Aufbau des Verbrenners 10 ermöglicht durch die Gestaltung einer Brennerdüse und eines Brennraums in Abhängigkeit des jeweils eingesetzten Brennmittels einen sehr hohen Wirkungsgrad. Die thermische Energie dieser Verbrennung wird dann überwiegend über die Abgase weitergeleitet.

Die heißen Abgase dienen in dem System nun zum Erwärmen des Bereichs 3b des Wärmetauschers 3 sowie des Bereichs 4b des Wärmetauschers 4. Dabei wird zumindest der Wärmetauscher 4 im Gegenstrombetrieb betrieben, was es erlaubt, die Abgastemperatur beim Verlassen des Bereichs 4b des Wärmetauschers 4 auf ein sehr kleines Niveau zu senken und somit die in dem heißen Abgas vorliegende thermische Energie wenigstens annähernd ganz in dem System zu nutzen. Dies ermöglicht einen sehr hohen Systemwirkungsgrad. Gleichzeitig kann der Wärmetauscher 3, je nach gegebenen Erfordernissen, sowohl im Gegenstrom als auch im Gleichstrom, wie beispielsweise in Fig. 1 dargestellt, und bei geeigneten Aufbau prinzipiell auch im Kreuzstrom betrieben werden. Damit ergibt sich eine hohe Variabilität der Möglichkeiten, welche eine sehr variable Versorgung der beiden Komponenten 1, 2 mit den entsprechenden Mengen an Dampf des entsprechenden Temperaturniveaus erlaubt.

Dabei kann es insbesondere sinnvoll sein, den Wärmetauscher 3 in einer sehr leichten Ausführung mit wenig Masse auszubilden. Durch die dadurch zu erzielende geringe Wärmekapazität des Wärmetauschers 3 läßt sich ein sehr schnelles dynamisches Ansprechverhalten des Wärmetauschers 3 erreichen und im Falle eines Kaltstarts des Systems bzw. der Brennstoffzellenanlage kann der Wärmetauscher 3 sehr schnell auf die erforderliche Temperatur gebracht werden.

Selbstverständlich können die Komponenten 1, 2 damit auch bezüglich einer dynamischen Versorgung mit Dampf sehr unterschiedlich angesprochen werden. Beispielsweise würde es sich anbieten, die Komponente 1 entsprechend so auszulegen, daß sie insbesondere bei einem Kaltstart der Anlage eine sehr hohe Reformierungsleistung zu erzielen vermag, wobei die Komponente 2 nach dem Erreichen der endgültigen Systemtemperatur die Hauptlast der zu reformierenden Menge an Methanol tragen könnte. In Verbindung mit den entsprechenden Wärmetauschern 3, 5, welche sich insbesondere bezüglich ihrer Baugröße und ihrer Masse diesen Verhältnissen anpassen, läßt sich so ein System zur Versorgung der wenigstens zwei Komponenten 1, 2 des Gaserzeugungssystems erreichen, welches neben einem guten dynamischen Ansprechverhalten auch hervorragende Kaltstarteigenschaften zu erzielen vermag.

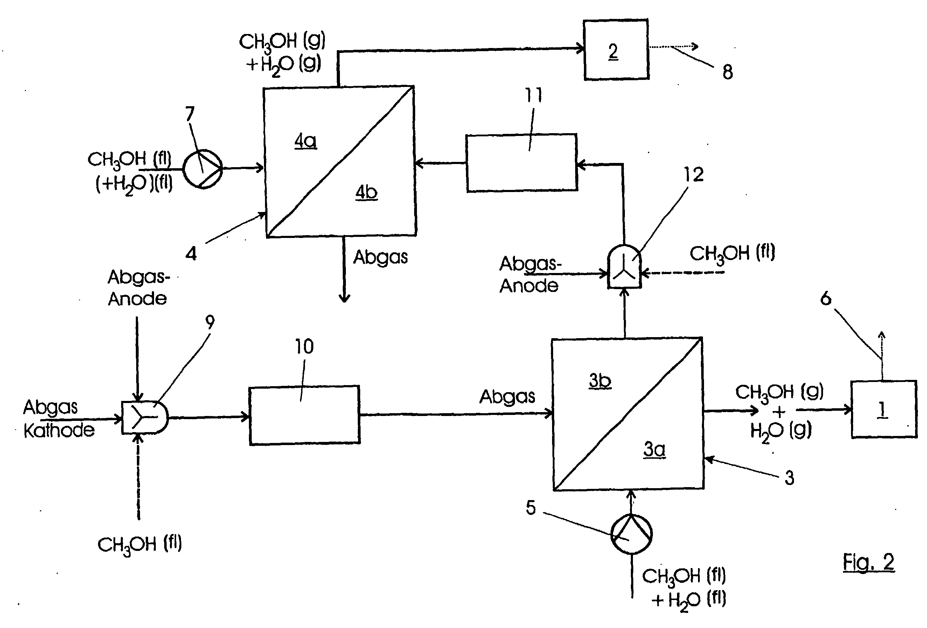

Fig. 2 zeigt einen prinzipmäßig vergleichbaren Aufbau, wobei dieser außer über den Vorbrenner 10 auch noch über einen Nachbrenner 11 verfügt, welcher über eine Mischeinrichtung 12 mit dem Abgas des Verbrenners 10, weiterem Anodenabgas und gegebenenfalls weiterem Brennmittel, hier also Methanol, versorgt wird.

Die Funktionsweise des Systems gemäß Fig. 2 unterscheidet sich dabei kaum von der Funktionsweise des Systems gemäß Fig. 1. Durch den zusätzlichen Nachbrenner 11, welcher in der Strömung des Abgases zwischen dem ersten Wärmetauscher 3 und dem zweiten Wärmetauscher 4 angeordnet ist, läßt sich jedoch das Abgas aus dem Vorbrenner 10 und dem ersten Wärmetauscher 3 erneut auf ein höheres Temperaturniveau bringen. Dadurch wird die Flexibilität der Anlage sowie das dynamische Ansprechverhalten insbesondere des zweiten Wärmetauschers 4 erhöht.

Außerdem erhöht der Aufbau mit zwei, insbesondere thermisch betriebenen Brennern, hier wäre jedoch prinzipiell auch der Einsatz eines katalytischen Vorbrenners und eines rein thermischen Nachbrenners oder vergleichbarer Kombinationen denkbar, sehr gut genutzt. Durch die beiden Brenner 10, 11 können praktisch alle in den Abgasen vorhandenen, brennbaren Reststoffe zur Erzeugung der erforderlichen thermischen Energie genutzt werden. Insbesondere in der Kombination mit dem zumindest in dem Wärmetauscher 4 realisierten Gegenstrombetrieb, lassen sich so praktisch alle chemischen sowie thermischen Energieinhalte des Brennstoffzellenabgases nutzen, wodurch sich der Wirkungsgrad des Gesamtsystems steigert.

Für die entsprechende Ansteuerung sowie die Massen- bzw. Wärmekapazitätsverhältnisse der einzelnen Wärmetauscher 3, 4 zur Versorgung der einzelnen Komponenten 1, 2 des Gaserzeugungssystems untereinander, gilt prinzipiell auch hier das unter Fig. 1 Erläuterte.

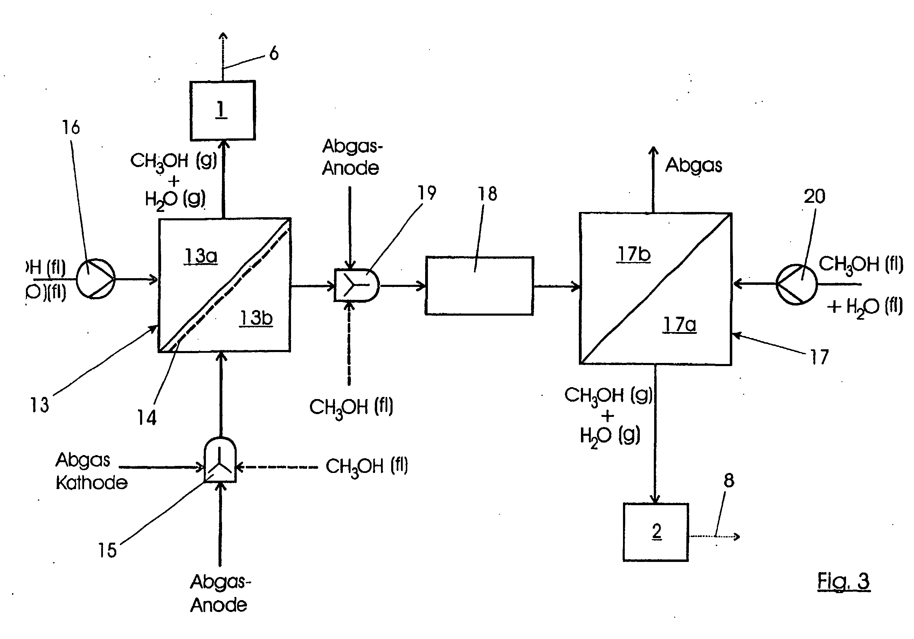

Fig. 3 zeigt nun einen Aufbau der prinzipiell dieselbe Aufgabe zu lösen vermag. Hier wird allerdings ein katalytisch direkt beheizter Wärmetauscher 13 eingesetzt, welcher in seinem dem Eintrag von thermischer Energie dienenden Bereich 13b ein Katalysatormaterial 14, beispielsweise in Form einer Beschichtung oder einer Füllung von mit Katalysatormaterial beschichteten Stoffen, aufweist. Diesem Bereich 13b des Wärmetauschers 13 wird dabei über eine Mischeinrichtung 15 ein Gemisch aus dem Anoden- und Kathodenabgas, welchem gegebenenfalls noch das Brennmittel, also hier das Methanol, zugegeben werden kann, zugeführt. In dem Bereich 13b des Wärmetauschers 13 kommt es dann zu einer katalytischen Verbrennung, die einen Teil ihrer Wärme direkt an den medienseitigen Bereich 13a des Wärmetauschers 13 und damit an das dort strömende über eine Dosiereinrichtung 16 eingebrachte zu verdampfende Methanol/Wasser-Gemisch abgibt. Dieser Methanol/Wasser-Dampf gelangt dann zu der Komponente 1 des Gaserzeugungssystems und von dort gemäß dem Pfeil 6 in an sich bekannter Weise zur weiteren, optionalen Komponenten des Gaserzeugungssystems oder direkt zu der Brennstoffzelle der Brennstoffzellenanlage.

Die heißen Abgase der katalytischen Verbrennung in dem Bereich 13b des Wärmetauschers 13 gelangen dann zu einem weiteren Wärmetauscher 17, welcher wiederum im Gegenstrom betrieben wird und in seiner prinzipiellen Funktionsweise mit dem Wärmetauscher 4 aus den vorhergehenden Ausführungsbeispielen vergleichbar ist. Durch den Gegenstrombetrieb des Wärmetauschers 17 läßt sich auch hier eine sehr niedrige Abgastemperatur erzielen.

Zwischen dem Wärmetauscher 13 und dem Wärmetauscher 17 ist ein Brenner 18 dargestellt, welcher vorzugsweise als katalytischer oder auch als thermischer Brenner 18 ausgebildet sein kann, und welcher über eine Mischeinrichtung 19 mit Anodenabgas der Brennstoffzelle und gegebenenfalls mit Methanol versorgt werden kann. Dieser Brenner 18 ermöglicht es dabei, die vergleichsweise kalten Abgase der katalytischen Verbrennung nochmals anzuwärmen und sämtliche in dem Abgas verbleibenden Reststoffe zu verbrennen. Zusammen mit dem Gegenstrombetrieb des Wärmetauschers 17 erhöht dies wiederum den Gesamtwirkungsgrad des Systems und verringert darüber hinaus die Schadstoffemission mit den Abgasen, da in dem Brenner 18 und der dort möglichen, vergleichsweisen hohen Temperatur wenigstens annähernd alle brennbaren Reststoffe aus dem Abgas oxidiert werden.

Das in dem Wärmetauscher 17 über eine Dosiereinrichtung 20 eingebrachte Methanol/Wasser-Gemisch wird in dem Wärmetauscher 17 verdampft und gelangt zu der Komponente 2 des Gaserzeugungssystems und von dort in an sich bekannter Weise gemäß dem Pfeil 8 zur Weiterverwendung.

Alle Ausführungsbeispiele, welche hier dargestellt wurden, erlauben es dabei, einerseits durch zwei getrennte Dosiereinrichtungen 5, 7, 16, 20 andererseits durch die Dosiereinrichtung 24 und die Ventileinrichtung 25, die zwei Komponenten 1, 2 des Gaserzeugungssystems relativ unabhängig voneinander mit der geforderten Menge des Methanol/Wasser-Dampfs des gewünschten Temperaturniveaus schnell zu versorgen. Dies kann vorwiegend dazu genutzt werden, die Komponente 1 in der Art auszulegen, daß sie ein sehr gutes KaltstartVerhalten aufweist und so direkt nach dem Start der Brennstoffzellenanlage den größten Teil der zur erbringenden Reformierungsleistung aufbringt, während bei Betriebstemperatur in der Anlage der größte Teil der zu reformierenden Leistung durch die Komponente 2 aufgebracht wird. Selbstverständlich ist es auch denkbar, die Komponenten 12 als einen mehrstufigen Prozeß in Reihe hintereinander zu schalten, wobei auch hier darauf geachtet werden sollte, daß über die Komponente 1 zum Zeitpunkt des Kaltstarts ein Alleinbetrieb der Anlage möglich ist.

Als Steuer- bzw. Regelgröße für die Verteilung der entsprechenden Methanol/Wasser-Dampf-Volumenströme, entweder über die Ansteuerung der Dosiereinrichtungen 5, 7, 16, 20 bzw. der Ventileinrichtung 25, kann dabei insbesondere die Systemtemperatur dienen.

## Patentansprüche

1. System zur Versorgung von wenigstens zwei Komponenten (1,2) eines Gaserzeugungssystems einer Brennstoffzellenanlage, insbesondere den Stufen eines mehrstufigen Reformierungsprozesses, mit einem verdampften und/oder überhitzten Kohlenwasserstoff oder einem Kohlenwasserstoff/Wasser-Gemisch, mit wenigstens zwei Wärmetauscher (3,4;13,17), die je einen medienseitigen Bereich (3a,4a;13a,17a) und einen dem Eintrag von thermischer Energie dienenden Bereich (3b,4b,13b,17b) aufweisen und die jeweils wenigstens einer der Komponenten (1,2) zugeordnet sind, wobei die dem Eintrag von thermischer Energie dienenden Bereiche (3b,4b;13b,17b) der wenigstens zwei Wärmetauscher (3,4;13,17) in der Art einer Reihenschaltung hintereinander geschaltet sind.

2. System nach Anspruch 1,
**dadurch gekennzeichnet, daß**
in dem dem Eintrag von thermischer Energie dienenden Bereich (13b) des in Richtung der Reihenschaltung ersten Wärmetauschers (13) eine katalytische Verbrennung von Abgasen der Brennstoffzelle und/oder zusätzlichem Brennstoff erfolgt, wobei die Abgase der katalytischen Verbrennung durch den dem Eintrag von thermischer Energie dienenden Bereich (17b) des in Richtung der Reihenschaltung zweiten Wärmetauschers (17) strömen.

3. System nach Anspruch 1,
**dadurch gekennzeichnet, daß**
in Richtung der Reihenschaltung vor dem dem Eintrag von thermischer Energie dienenden Bereich (3b) des in Richtung der Reihenschaltung ersten Wärmetauschers (3) ein Vorbrenner (10) angeordnet ist, wobei Abgase aus einer in dem Vorbrenner (10) stattfindenden Verbrennung durch die dem Eintrag von thermischer Energie dienenden Bereiche (3b,4b) der wenigstens zwei Wärmetauscher (3,4) strömen.

4. System nach Anspruch 3,
**dadurch gekennzeichnet, daß**
in dem Vorbrenner (10) eine wenigstens annähernd vollständige Oxidation der Abgase der Brennstoffzelle und/oder des Brennstoffs erfolgt.

5. System nach Anspruch 3,
**dadurch gekennzeichnet, daß**
in dem Vorbrenner (10) eine katalytische Verbrennung der Abgase der Brennstoffzelle und/oder des Brennstoffs erfolgt.

6. System nach einem der Ansprüche 1 bis 5,
**dadurch gekennzeichnet, daß**
zwischen dem dem Eintrag von thermischer Energie dienenden Bereich (3b,13b) des in Richtung der Reihenschaltung ersten Wärmetauschers (3,13) und dem dem Eintrag von thermischer Energie dienenden Bereich (4b,17b) des in Richtung der Reihenschaltung zweiten Wärmetauschers (4,17) ein Nachbrenner (11,18) angeordnet ist, in welchem eine Verbrennung von Abgasen der Brennstoffzelle und/oder zusätzlichem Brennstoff erfolgt.

7. System nach einem der Ansprüche 1 bis 6,
**dadurch gekennzeichnet, daß**
einer der wenigstens zwei Wärmetauscher (3,13) eine deutlich geringere Masse als der wenigstens eine andere Wärmetauscher (4,17) aufweist.

8. System nach einem der Ansprüche 1 bis 7,
**dadurch gekennzeichnet, daß**
jeder der Wärmetauscher (3,4,13,17) jeweils wenigstens eine bezüglich der dosierten Menge an Kohlenwasserstoff oder Kohlenwasserstoff/Wasser-Gemisch steuer- oder regelbare Dosiereinrichtung (5,7;16,20) aufweist.

9. System nach Anspruch 8,
**dadurch gekennzeichnet, daß**
eine Aufteilung der Volumenströme des Kohlenwasserstoffs oder des Kohlenwasserstoff/Wasser-Gemischs über die Ventileinrichtung (25) oder die Dosiereinrichtungen (5,7,16,20) in Abhängigkeit der Temperatur der wenigstens zwei Komponenten (1, 2) erfolgt.

10. System nach einem der Ansprüche 1 bis 9,
**dadurch gekennzeichnet, daß**
zumindest die in Strömungsrichtung der Abgase der Verbrennung letzten Wärmetauscher (4,17,21) im Gegenstrom betrieben werden.

11. System nach einem der Ansprüche 1 bis 10,
**dadurch gekennzeichnet, daß**
es sich bei dem Kohlenwasserstoff um Methanol handelt.

12. System nach einem der Ansprüche 2 bis 11,
**dadurch gekennzeichnet, daß**
es sich bei dem Brennstoff um Methanol handelt.

## Claims

1. A system for supplying at least two components (1, 2) of a gas generating system of a fuel cell plant, in particular the stages of a multiple-stage reforming process, with an evaporated and/or overheated hydrocarbon or a hydrocarbon/water mixture, comprising at least two heat exchangers (3, 4; 13, 17), each having a medium-side region (3a, 4a; 13a, 17a) and a region (3b, 4b, 13b, 17b) for introducing thermal energy and which are each associated to at least one of said components (1, 2), wherein the regions (3b, 4b; 13b, 17b) for introducing thermal energy of the at least two heat exchangers (3, 4; 13, 17) are connected in series in a series-type connection.

2. The system according to claim 1,
**characterized in that** in the region (13b) for introducing thermal energy of the first heat exchanger (13), in the direction of the series connection, a catalytic combustion of exhaust gases of the fuel cell and/or additional fuel is effected, wherein the exhaust gases of the catalytic combustion flow through the region (17b) for introducing thermal energy of the second, in the direction of the series connection, heat exchanger (17).

3. The system according to claim 1,
**characterized in that** a pre-burner (10) is arranged, in the direction of the series connection, prior to the region (3b) for introducing thermal energy of the first, in the direction of the series connection, heat exchanger (3), wherein exhaust gases from a combustion taking place within the pre-burner (10) flow though the regions (3b, 4b) for introducing thermal energy of the at least two heat exchangers (3, 4).

4. The system according to claim 3,
**characterized in that** in the pre-burner (10) an at least nearly complete oxidation of the exhaust gases of the fuel cell and/or the fuel is effected.

5. The system according to claim 3,
**characterized in that** in the pre-burner (10) a catalytic combustion of the exhaust gases of the fuel cell and/or the fuel is effected.

6. The system according to any one of claims 1 to 5,
**characterized in that** an after-burner (11, 18) is arranged between the region (3b, 13b) for introducing thermal energy of the first, in the direction of the series connection, heat exchanger (3, 13) and the region (4b, 17b) for introducing thermal energy of the second, in the direction of the series connection, heat exchanger (4, 17), in which after-burner a combustion of exhaust gases of the fuel cell and/or additional fuel is effected.

7. The system according to any one of claims 1 to 6,
**characterized in that** one of the at least two heat exchangers (3, 13) has a considerably lower mass than the at least one other heat exchanger (4, 17).

8. The system according to any one of claims 1 to 7,
**characterized in that** each of the heat exchangers (3, 4, 13, 17) comprises at least one respective dosing means (5, 7; 16, 20), which can be controlled or regulated with respect to the dosed amount of hydrocarbon or hydrocarbon/water mixture.

9. The system according to claim 8,
**characterized in that** a division of the volume streams of the hydrocarbon or the hydrocarbon/water mixture is effected by the valve means (25) or the dosing means (5, 7, 16, 20) in dependence on the temperature of the at least two components (1, 2).

10. The system according to any one of claims 1 to 9,
**characterized in that** at least the last, with regard to the flow direction of the exhaust gases, heat exchangers (4, 17, 21) are operated in counter current flow.

11. The system according to any one of claims 1 to 10,
**characterized in that** the hydrocarbon is methanol.

12. The system according to any one of claims 2 to 11,
**characterized in that** the fuel is methanol.

## Revendications

1. Système servant à l'alimentation d'au moins deux composants (1, 2) d'un système générateur de gaz d'une pile à combustible, en particulier dans les étapes d'un processus de reformage multistade, comprenant un hydrocarbure vaporisé et/ou surchauffé ou un mélange hydrocarbure/eau et présentant au moins deux échangeurs thermiques (3, 4; 13, 17) lesquels présentent chacun une zone de circulation du fluide (3a, 4a ; 13a, 17a) et une zone d'entrée de l'énergie thermique (3b, 4b ; 13b, 17b) et sont associés respectivement à au moins l'un des composants (1, 2), les zones d'entrée de l'énergie thermique (3b, 4b ; 13b, 17b) pour le moins des deux échangeurs thermiques(3, 4 ; 13, 17) étant agencées suivant un montage du type en série.

2. Système selon la revendication 1,
**caractérisé en ce qu'**une combustion catalytique des gaz d'échappement de la pile à combustible et/ou du combustible supplémentaire se produit dans la zone d'entrée de l'énergie thermique (13b) du premier échangeur thermique (13) vu dans le sens du montage en série, les gaz d'échappement issus de la combustion catalytique traversant la zone d'entrée de l'énergie thermique (17b) du deuxième échangeur thermique (17) vu dans le sens du montage en série.

3. Système selon la revendication 1,
**caractérisé en ce qu'**un brûleur amont (10) est, vu dans le sens du montage en série, disposé en amont de la zone d'entrée de l'énergie thermique (3b) du premier échangeur thermique (3) vu dans le sens du montage en série, les gaz d'échappement issus d'une combustion opérée à l'intérieur du brûleur amont (10) traversant les zones d'entrée de l'énergie thermique (3b, 4b) des au moins deux échangeurs thermiques (3, 4).

4. Système selon la revendication 3,
**caractérisé en ce qu'**une oxydation pour le moins quasi totale des gaz d'échappement de la pile à combustible et/ou du combustible se produit dans le brûleur amont (10).

5. Système selon la revendication 3,
**caractérisé en ce qu'**une combustion catalytique des gaz d'échappement de la pile à combustible et/ou du combustible se produit dans le brûleur amont (10).

6. Système selon l'une des revendications 1 à 5,
**caractérisé en ce qu'**un brûleur aval (11, 18), dans lequel se produit une combustion des gaz d'échappement de la pile à combustible et/ou du combustible supplémentaire, est disposé entre la zone d'entrée de l'énergie thermique (3b, 13b) du premier échangeur thermique (3, 13) vu dans le sens du montage en série et la zone d'entrée de l'énergie thermique (4b, 17b) du deuxième échangeur thermique (4, 17) vu dans le sens du montage en série.

7. Système selon l'une des revendications 1 à 6,
**caractérisé en ce que** l'un des deux échangeurs thermiques (3, 13) au moins présente une masse nettement plus faible que pour le moins l'autre échangeur thermique (4, 17).

8. Système selon l'une des revendications 1 à 7,
**caractérisé en ce que** chacun des échangeurs thermiques (3, 4, 13, 17) présente au moins un dispositif doseur (5, 7 ; 16, 20) réglable ou ajustable pour le dosage de la quantité d'hydrocarbure ou du mélange hydrocarbure/eau.

9. Système selon la revendication 8,
**caractérisé en ce que** les flux volumiques de l'hydrocarbure ou du mélange hydrocarbure/eau sont répartis à l'aide du dispositif à vanne (25) ou des dispositifs de dosage (5, 7, 16, 20) en fonction de la température pour le moins des deux composants (1, 2).

10. Système selon l'une des revendications 1 à 9,
**caractérisé en ce que** pour le moins les derniers échangeurs thermiques (4, 17, 21) vus dans le sens d'écoulement des gaz d'échappement issus de la combustion fonctionnent en contre-courant.

11. Système selon l'une des revendications 1 à 10,
**caractérisé en ce que** l'hydrocarbure est constitué par du méthanol.

12. Système selon l'une des revendications 2 à 11,
**caractérisé en ce que** le combustible est constitué par du méthanol.
